# EUROPÄISCHE PATENTSCHRIFT

(11) **EP 0 709 617 B1**
(45) Veröffentlichungstag und Bekanntmachung des Hinweises auf die Patenterteilung: **05.02.2003**
(21) Anmeldenummer: 95115670.2
(22) Anmeldetag: 05.10.1995
(51) Int. Cl.: F16N 7/32, F16N 19/00, D04B 35/28, B05B 9/04

(54) **Vorrichtung zur dosierten Zufuhr einer Flüssigkeit**
Device for dosing the supply of a liquid
Dispositif de dosage d'alimentation d'un liquide

(30) Priorität: 27.10.1994 DE 9417091 U
(43) Veröffentlichungstag der Anmeldung: 01.05.1996
(73) Patentinhaber: SIPRA Patententwicklungs- und Beteiligungsgesellschaft mbH, D-72461 Albstadt (DE)
(72) Erfinder: Plath, Ernst-Dieter, D-72461 Albstadt (DE); Tränkle, Dietmar, D-72336 Balingen (DE); Baumann, Armin, D-72461 Albstadt (DE)
(74) Vertreter: Freiherr von Schorlemer, Reinfried, Dipl.-Phys.

(56) Entgegenhaltungen:
- DE-A- 2 320 635
- US-A- 3 118 569
- US-A- 3 788 343
- US-A- 5 197 569

## Beschreibung

Die Erfindnung betrifft eine Vorrichtung der imm Oberbegriff des Anspruchs 1 angegebenen Gattung.

Bekannte Vorrichtungen zur Zufuhr von Flüssigkeiten, insbesondere Öl zu einer Strickmaschine, insbesondere einer Rundstrickmaschine, dienen zur Schmierung und/oder Reinigung ausgewählter Maschinenteile, z.B. der Nadelzylindernuten oder der im Schloßmantel ausgebildeten Bahnen für die Stricknadelfüße (z.B. DE 36 09 440 A1, DE 36 24 982 A1, DE 41 04 793 A1, EP 0 549 871 A1). Zur Förderung des Öls sind dabei durchweg Pumpen verschiedener Art in Verbindung mit Magnetventilen od. dgl. vorgesehen, die zur taktweisen Verteilung des geförderten Öls an ausgewählte Zuführstellen dienen. Ähnliche Vorrichtungen sind bei Rundstrickmaschinen zur Zuführung von Spülöl zu Reinigungszwecken bekannt (EP-A-0 549 871). Dabei wird das Spülöl in Zuführphasen in eine Zuführleitung gedrückt und gleichzeitig ein Durchgang zu einem Vorratstank für das Spülöl verschlossen, indem das Spülöl mit einem durch Druckluft bewegten Kolben einer Kolbenpumpe gefördert wird, die zwei Rückschlagventile besitzt, die entweder die Zuführleitung geöffnet und den Durchgang geschlossen halten oder umgekehrt. Ein Problem derartiger Vorrichtungen besteht darin, daß manche Öle, die eine gute Schmierund Reinigungswirkung besitzen, gleichzeitig agressive Eigenschaften haben und im Laufe der Zeit Schäden an den Pumpen, Ventilen, zugehörigen Überwachungseinrichtungen od. dgl. hervorrufen. Dasselbe gilt für etwa vorhandene Druckbegrenzungsventile, die häufig vorgesehen werden, um auch bei schwankenden Pumpenleistungen sicherzustellen, daß an die Zuführstellen im wesentlichen konstante Ölmengen pro Zeiteinheit abgegeben werden.

Daneben sind bereits Vorrichtungen der eingangs bezeichneten Gattung bekannt geworden (DE-OS 25 43 913), bei denen diese Probleme dadurch vermieden werden, daß Druckluft zur Förderung des Öls verwendet wird, weil hierdurch insbesondere die Anwendung der vom Öl durchflossenen Pumpen und Druckbegrenzungsventile überflüssig wird. Bei diesen bekannten Vorrichtungen ergibt sich jedoch der Nachteil, daß der Ölvorrat in dem mit Druckluft beaufschlagten Druckbehälter bei fortdauernder Ölzufuhr immer mehr abnimmt.

Dadurch werden immer größere Druckluftmengen zum Aufbau des gewünschten Förderdrucks benötigt, insbesondere wenn es erwünscht ist, den Druckbehälter nach jedem Zuführabschnitt zu entlüften, um an die Zuführleitung angeschlossene Verteilerschaltungen während derjenigen Phasen, in denen kein Öl zugeführt wird, drucklos zu machen und dadurch zu schonen. Außerdem werden wegen der abnehmenden Ölmenge im Druckbehälter immer größere Zeitspannen zum Aufbau des Förderdrucks benötigt, da zunächst einmal der Raum über dem jeweiligen Ölspiegel mit Druckluft gefüllt werden muß. Eine Folge davon ist, daß zusätzliche Maßnahmen erforderlich sind, um unabhängig von dem im Druckbehälter vorhandenen Ölstand konstante Ölmengen pro Zeiteinheit an die Schmierstellen zu liefern. Schließlich kann bei dieser bekannten Vorrichtung der Druckbehälter immer nur zu Zeitpunkten neu gefüllt werden, in denen an keine Zuführstelle Öl geliefert wird, was praktisch gleichbedeutend mit der Notwendigkeit ist, die Strickmaschine od. dgl. beim Nachfüllen des Druckbehälters stillzusetzen. Abgesehen davon muß ein Druckbehälter dieser Art sehr stabil und um so stabiler sein, je größer seine dem Druck ausgesetzten Flächen sind.

Schließlich ist in Verbindung mit Spritzpistolen für Farben eine Vorrichtung bekannt (US-A-3 118 569), die einen Druckbehälter mit vergleichsweise kleinem Volumen aufweist, der in einem ein vergleichsweise großes Volumen aufweisenden Vorratsbehälter für die Farben derart angeordnet ist, daß beim Auslösen der Spritzpistole (Zuführphase) Farbe aus dem Druckbehälter durch die Spritzpistole gedrückt, bei Nichtbetätigung der Spritzpistole (Füllphase) dagegen Farbe aus dem Vorratsbehälter in den Druckbehälter geliefert wird, um diesen nachzufüllen. Ein wesentlicher Nachteil dieser Vorrichtung besteht darin, daß zur Steuerung der Zuführphasen und der Füllphasen separate Druckluftleitungen und separate, mit Druckluft gesteuerte Steuermittel vorgesehen sind, so daß sich insgesamt eine komplizierte und damit störanfaällige und kostenaufwendige Anordnung ergibt. Abgesehen davon handelt es sich um eine manuell zu betätigende Vorrichtung, die nicht ohne weiteres zur dosierten, in zeitlich beabstandeten Phasen erfolgenden, automatischen Zufuhr von Flüssigkeiten geeignet ist.

Demgegenüber liegt der Erfindung die Aufgabe zugrunde, die Vorrichtung der eingangs bezeichneten Gattung so auszubilden, daß sie mit einfachen und kostengünstigen Mitteln eine zuverlässige Steuerung der Zuführ- und Füllphasen ermöglicht.

Zur Lösung dieser Aufgabe dienen die Merkmale des Anspruchs 1.

Weitere vorteilhafte Merkmale der Erfindung ergeben sich aus den Unteransprüchen.

Die Erfindung wird nachfolgend in Verbindung mit der beiliegenden Zeichnung an einem Ausführungsbeispiel näher erläutert. Es zeigen:
Fig. 1 schematisch eine teilweise geschnittene Seitenansicht einer ersten Ausführungsform der erfindungsgemäßen Vorrichtung;
Fig. 2 eine Vorderansicht insbesondere eines einen Druckbehälter und einen Ölvorratstank enthaltenden Teils der erfindungsgemäßen Vorrichtung im Schnitt längs einer Linie II-II der Fig. 3 in vergrößertem Maßstab;
Fig. 3 eine Draufsicht auf den Teil der Vorrichtung nach Fig. 2;
Fig. 4 eine schematische Darstellung einer zweiten Ausführungsform der erfindungsgemäßen Vorrichtung;
Fig. 5 und 6 Horizontalschnitte durch eine weitere Ausführungsform der Erfindung in unterschiedlichen Betriebsstellungen eines Steuerventils; und
Fig. 7 und 8 Horizontalschnitte durch zwei weitere Ausführungsformen der Erfindung.

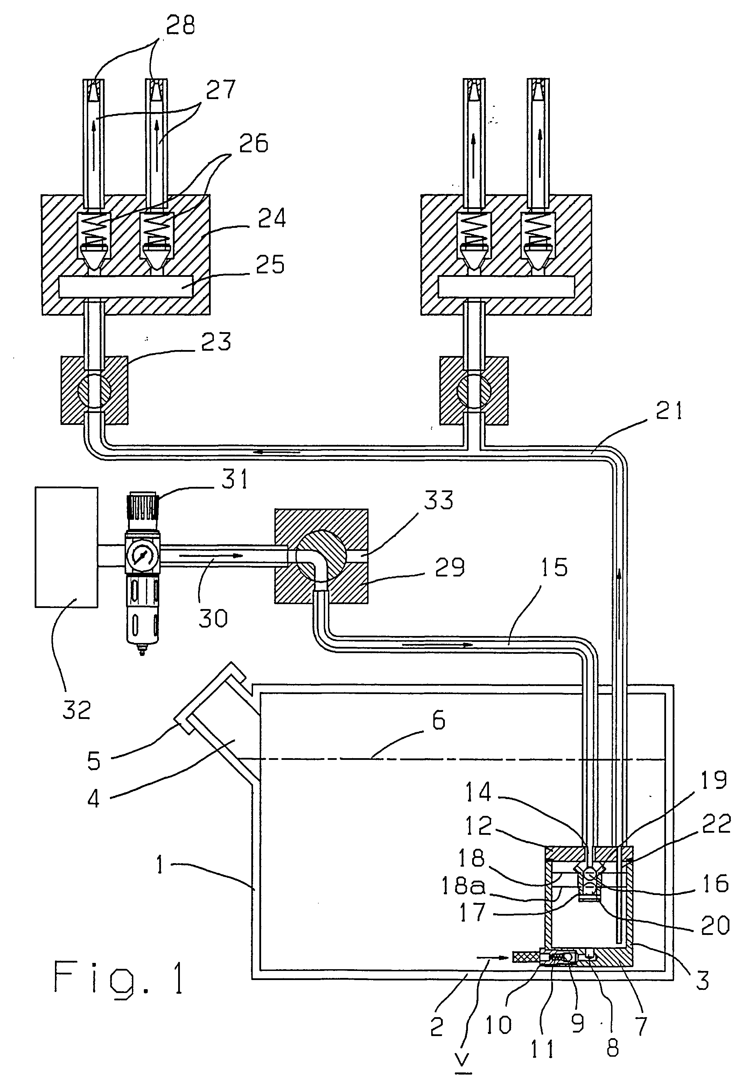

Die Vorrichtung nach Fig. 1 enthält einen Vorratstank 1 für eine Flüssigkeit, insbesondere Öl, an dessen Boden ein Druckbehälter 3 angeordnet ist. Der Vorratstank 1 ist vorzugsweise rundum verschlossen, jedoch seitlich mit einem Einfüllstutzen 4 versehen, der mittels eines Deckels 5 geöffnet bzw. geschlossen werden kann. Der Vorratstank 1 wird vor Inbetriebnahme der Vorrichtung z.B. bis zu einem maximalen vorgesehenen Flüssigkeitsspiegel 6 mit Flüssigkeit bzw. Öl gefüllt.

Der Druckbehälter 3 ist vorzugsweise an seinem Boden 7 mit einem Durchgang 8 versehen, der seinen Innenraum mit dem Innenraum des Vorratstanks 1 verbindet. In diesen Durchgang 8 ist ein z.B. mit einer Kugel 9 versehenes Rückschlagventil 10 eingesetzt. Dabei ist die Anordnung so getroffen, daß die Kugel 9 normalerweise durch die Kraft einer Feder 11 von einem Ventilsitz abgehoben ist und dadurch Öl in Richtung eines Pfeils v (Fig. 1) vom Ölvorratstank 1 in den Druckbehälter 3 fließen kann. Wird im Innenraum des Druckbehälters 3 dagegen ein erhöhter Druck aufgebaut, wird die Kugel 9 durch den zurückströmenden Ölstrom mitgerissen und gegen die Kraft der Feder 11 auf den Ventilsitz gedrückt und dadurch das Rückschlagventil 10 bzw. der Durchgang 8 geschlossen, um einen weiteren Rückstrom von Öl in den Ölvorratstank 1 zu verhindern.

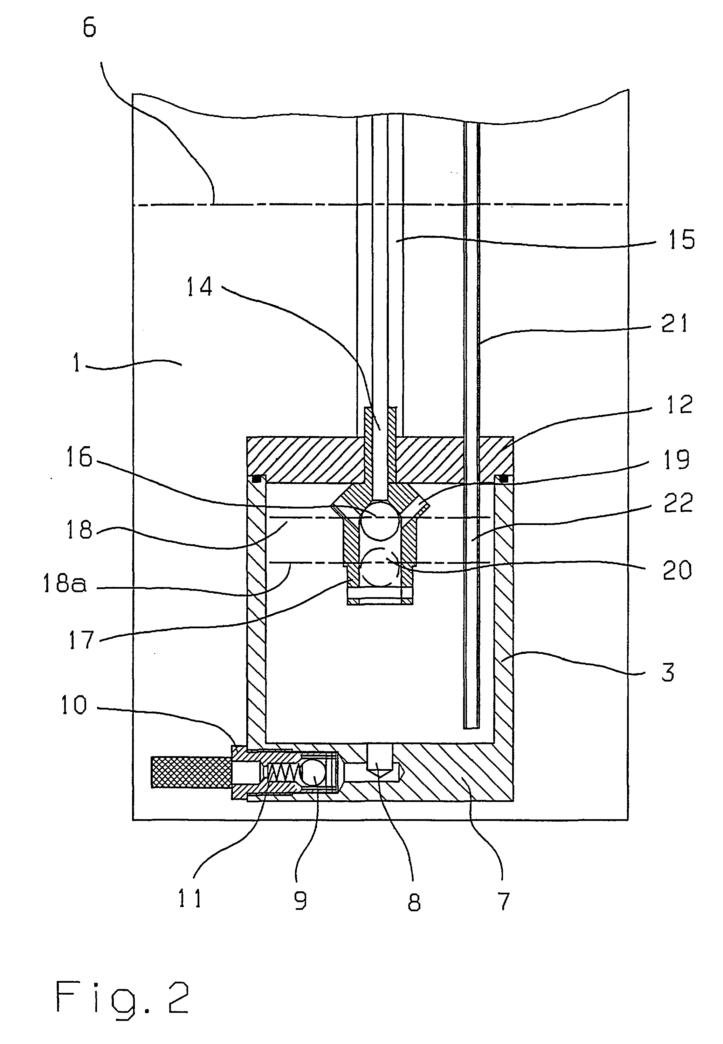

Der Druckbehälter 3 ist außerdem vorzugsweise an seiner Decke 12 mit einem weiteren Durchgang 14 versehen, die mit einer äußeren Druckleitung 15 verbunden ist. An diesen Durchgang 14 ist ein z.B. mit einer Kugel 16 versehenes und vertikal am oberen Ende des Druckbehälters 3 angeordnetes Schwimmerventil 17 angeschlossen. Dabei ist die Anordnung so getroffen, daß die Kugel 16 bei einem maximalen vorgesehenen Flüssigkeitsspiegel 18 im Druckbehälter 3 durch die Kraft des Öls od. dgl. in einer in Fig. 1 und 2 oberen Stellung gegen einen Ventilsitz gedrückt und dadurch der Durchgang 14 verschlossen gehalten wird. Dadurch sind gleichzeitig mehrere, in der Seitenwand des Schwimmerventils 17 ausgebildete Öffnungen 19 vom Durchgang 14 abgetrennt. Die Öffnungen 19 dienen dazu, den Durchgang 14 mit dem Innenraum des Druckbehälters 3 zu verbinden, und münden dazu vorzugsweise an Stellen, die unmittelbar an dessen Decke 12 grenzen. Sinkt dagegen der Flüssigkeitsspiegel 18 im Druckbehälter 3 unter das aus Fig. 1 und 2 ersichtliche Niveau ab, z.B. bis zu einem Niveau 18a, dann fällt die Kugel 16 aufgrund ihrer Schwerkraft bis zu einem Anschlag des Schwimmerventils 17 ab, der so gewählt ist, daß jetzt der Durchgang 14 freigegeben und über die Öffnungen 19 mit dem Innenraum des Druckbehälters 3 verbunden ist. Außerdem gleitet die Kugel 16 bei dieser Bewegung in einem ebenfalls zum Innenraum des Druckbehälters 3 hin offenen Kanal 20 des Schwimmerventils 17, so daß sie bei wieder steigendem Ölspiegel von diesem angehoben werden und den Durchgang 14 erneut verschließen kann.

Zur Förderung des im Druckbehälter 3 befindlichen Öls dient eine Zuführleitung 21, deren eines Ende vorzugsweise als ein in den Druckbehälter 3 ragendes, mit seiner freien Öffnung dicht an dessen Boden 7 angeordnetes Steigrohr 22 ausgebildet ist. Das andere Ende der Zuführleitung 21 nach Fig. 1 ist über wenigstens ein Magnetventil 23 mit wenigstens einem Verteilerblock 24 verbunden, der einen Verteilerkanal 25 aufweist, der über vorzugsweise mehrere Rückschlagventile 26, die in den Verteilerblock 24 eingebaut sind, mit Verteilerleitungen 27 verbunden ist. Diese weisen an ihren freien Enden jeweils Düsen 28 auf, die nicht näher dargestellte Zuführstellen repräsentieren und auf zu schmierende oder zu reinigende Teile einer Strickmaschine od. dgl. gerichtet sind. Derartige Verteilereinrichtungen und ihnen bei Bedarf zugeordnete Überwachungseinrichtungen sind z.B. aus DE 36 24 982 A1 und DE 40 21 557 A1 allgemein bekannt.

Die Druckleitung 15 ist nach Fig. 1 über ein Dreiwegeventil 29 an eine Leitung 30 angeschlossen, die mit dem Ausgang eines Druckregelventils 31 verbunden ist. Dieses ist mit einer schematisch dargestellten Druckluftquelle 32 verbunden, die z.B. aus einer in Fabriken üblicherweise vorhandenen 6 bar-Druckleitung besteht und vorzugsweise mit einem Kontrollschalter versehen ist, der die mit Öl zu versorgende Maschine od. dgl. abstellt, wenn der Luftdruck am Ausgang des Druckregelventils 31 unter einen eingestellten Wert von beispielsweise 2,5 bar abfällt.

Die Funktionsweise der beschriebenen Vorrichtung ist unter der Voraussetzung, daß der Vorratstank 1 und der Druckbehälter 3 bis zu den Flüssigkeitsspiegeln 6 bzw. 18 mit Flüssigkeit gefüllt sind, d.h. der maximal vorgesehene Flüssigkeitsspiegel 6 im Vorratstank 1 höher als der maximal vorgesehene Flüssigkeitsspiegel 18 im Druckbehälter 3 liegt, wie folgt:

Soll Öl an die Düsen 28 geliefert werden, wird zunächst das Druckregelventil 31 eingeschaltet und das Dreiwegeventil 29 in die aus Fig. 1 ersichtliche Stellung gebracht. Dadurch wird Druckluft über die Druckleitung 15 und den Durchgang 14 in das Schwimmerventil 17 gedrückt, so daß dessen Kugel 16 vom Ventilsitz verdrängt und der Durchgang 14 zu jeder vorhandenen Öffnung 19 hin geöffnet wird. Dabei münden die Auslässe aller Öffnungen 19 in einem Raum oberhalb des Ölspiegels 18 in den Druckbehälter 3, so daß als Folge des oberhalb des Ölspiegels 18 ausgebildeten Luftdrucks einerseits die Kugel 9 des Rückschlagventils 10 gegen die Kraft der Feder 11 fest gegen den zugehörigen Ventilsitz gepreßt und damit die Leitung 8 zum Ölvorratstank 1 fest abgeschlossen wird. Andererseits wird während einer solchen Zuführphase Öl aus dem Druckbehälter 3 in das Steigrohr 22 und von dort in Richtung der eingezeichneten Pfeile in diejenigen Verteilerblöcke 24 transportiert, deren Magnetventile 23 entsprechend Fig. 1 gerade geöffnet sind. Dadurch wird unter Druck stehendes Öl durch die Düsen 28 an die ausgewählten Zuführstellen abgegeben.

Nach einer vorgewählten Zuführdauer können andere, in Fig. 1 nicht dargestellte Magnetventile 23 geöffnet und die aus Fig. 1 ersichtlichen Magnetventile 23 geschlossen werden, um das Öl an andere Stellen zu transportieren. Ist keine Ölzufuhr mehr erwünscht, werden zweckmäßig zunächst alle offenen Magnetventile 23 geschlossen, indem deren Ventilkörper um 90° gedreht werden, um dadurch einen Leerlauf der Verteilerblöcke 24 und der damit verbundenen Teile zu verhindern. Anschließend wird das Dreiwegeventil 29 aus der Stellung nach Fig. 1 durch Drehung seines Ventilkörpers um 90° im Gegenuhrzeigersinn in eine Stellung gebracht, in welcher die Druckleitung 15 mit einem zur Atmosphäre führenden Auslaß 33 des Dreiwegeventils 29 verbunden und vom Druckregelventil 31 abgetrennt ist. Dadurch wird einerseits der Raum oberhalb des inzwischen auf das Niveau 18a oder noch tiefer abgefallenen Ölspiegels im Druckbehälter 3 entlüftet, andererseits die Kugel 9 unter dem Einfluß der Feder 11 und der im Vorratstank 1 vorhandenen Ölsäule vom Ventilsitz des Rückschlagventils 10 angehoben. Als Folge davon fließt Öl aus dem Vorratstank 1 in den Druckbehälter 3, so daß dieser neu gefüllt wird, bis sein Ölspiegel wieder das Niveau 18 erreicht und die mit dem Öl angehobene Kugel 16 erneut den Durchgang 14 versperrt. Dadurch ist gleichzeitig sichergestellt, daß der Druckbehälter 3 nur bis zum eingezeichneten Ölspiegel 18 gefüllt wird und oberhalb desselben ein der Zuführung der Druckluft dienender Raum frei bleibt. Abschließend kann das Druckregelventil 31 geschlossen werden, um die gesamte Vorrichtung zur Schonung ihrer Teile drucklos zu machen.

Ist ein weiterer Schmier- oder Reinigungsvorgang erwünscht, werden die beschriebenen Verfahrensschritte wiederholt.

Die beschriebene Vorrichtung bringt zahlreiche Vorteile mit sich. Zunächst ist es möglich, das Volumen des Druckbehälters 3 so klein zu halten, wie für eine einmalige Zuführphase gerade ausreichend ist, da der Druckbehälter 3 nach einer solchen Phase automatisch wieder bis zum ursprünglichen Flüssigkeitsspiegel 18 gefüllt wird. Gleichzeitig kann der Vorratstank 1 vergleichsweise groß und wenig stabil ausgebildet werden, da er lediglich zum taktweisen Nachfüllen des Druckbehälters 3 dient, aber nicht am eigentlichen Zuführvorgang beteiligt ist, und auf seine Innenflächen keine großen Druckkräfte ausgeübt werden. Aus demselben Grund kann der Vorratstank auch bei in Betrieb befindlicher Vorrichtung nachgefüllt werden. Dabei kann die Nachfüllung mit frischem Öl, aber auch mit bereits benutztem Öl erfolgen, das nach dem Abtropfen von behandelten Teilen aufgefangen, bei Bedarf einem Recyclingschritt unterworfen und dann wiederverwendet wird.

Im Hinblick auf die Ansprechempfindlichkeit und das in den Druckbehälter 3 einzuführende Luftvolumen ergibt sich weiter der Vorteil, daß bei jeder Zuführphase dieselben Ausgangsbedingungen vorgefunden werden. Daher arbeitet die Vorrichtung in jeder Zuführphase unabhängig vom aktuellen Ölstand im Vorratstank 1 stets in derselben Weise, so daß keine zusätzlichen Maßnahmen erforderlich sind, um die Ansprechempfindlichkeit und die an die Düsen 28 gelieferten Ölmengen pro Zeiteinheit in Abhängigkeit vom aktuellen Ölstand zu verändern. Weiter muß nur der vergleichsweise kleine Druckbehälter 3 druckfest (z.B. bis 6 bar) ausgebildet und dazu z.B. aus 2,5 mm starkem Stahlblech hergestellt werden, während der Vorratstank 1 normal ausgebildet sein kann. Schließlich ist vorteilhaft, daß nur die Magnetventile 23 von Öl durchflossen sind, während die anderen empfindlichen Teile der Steuerung (29,31) nur Druckluft befördern und Pumpen ganz vermieden werden. Die Vorrichtung weist daher nur wenige Verschleißteile auf und ist insgesamt robust, störunempfindlich und einfach zu handhaben.

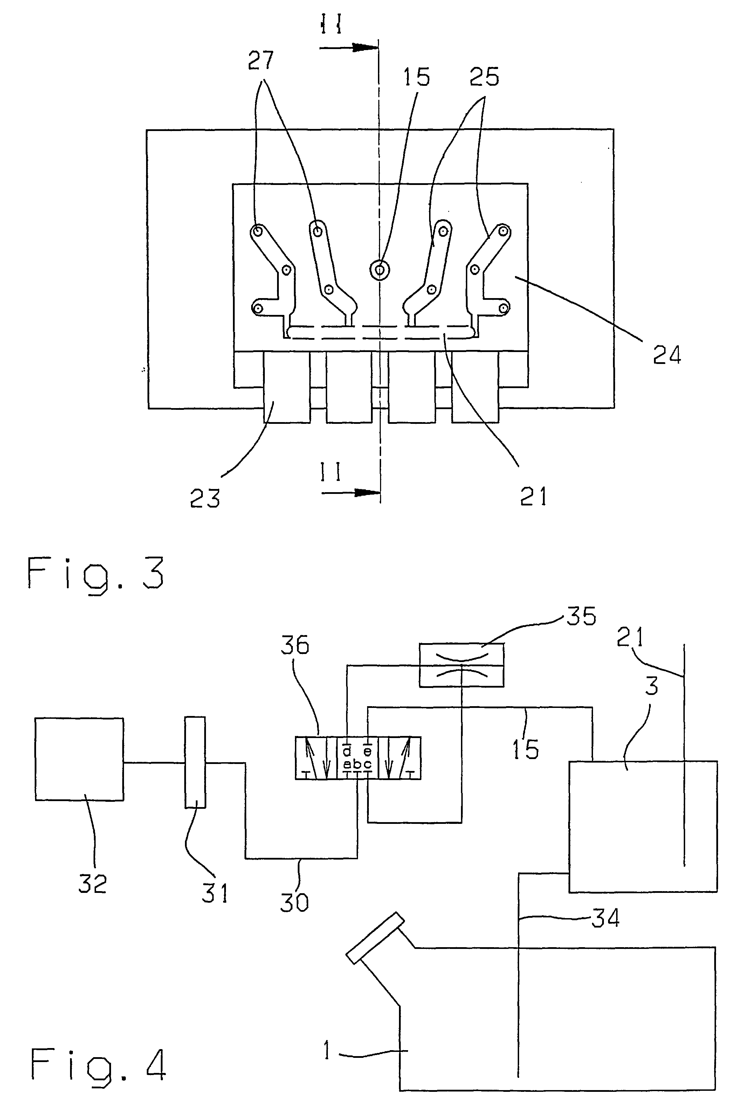

Bei der Ausführungsform nach Fig. 4, in der gleiche Teile mit denselben Bezugszeichen wie in Fig. 1 bis 3 versehen sind, ist der Druckbehälter 3 außerhalb und oberhalb des Vorratstanks 1 bzw. so angeordnet, daß sein maximal vorgesehener Flüssigkeitsspiegel oberhalb des maximal vorgesehenen Flüssigkeitsspiegels im Vorratstank 1 liegt. Dabei ist der am Boden des Druckbehälters 3 vorgesehene, in Fig. 4 nicht dargestellte Durchgang 8 (Fig. 1, 2) mit dem Vorratstank 1 über eine Leitung 34 verbunden, die z.B. am oberen Ende in den Vorratstank 1 mündet und von dort als ein bis zu dessen Boden reichendes Steigrohr ausgebildet ist.

Da in diesem Fall das Öl nicht durch Schwerkraft aus dem Vorratstank 1 in den Druckbehälter 3 strömen kann, ist diesem ein Mittel zur Erzeugung eines Unterdrucks zugeordnet, das während der Füllphasen an einer vorzugsweise oberhalb des momentanen Flüssigkeitsspiegels gelegenen Stelle einen Unterdruck erzeugt. Sobald daher der Druck im Druckbehälter 3 ausreichend klein ist, wird Öl über die Leitung 34 aus dem Vorratstank 1 in den Druckbehälter 3 gezogen.

Im Ausführungsbeispiel enthält das Mittel zur Erzeugung des Unterdrucks eine Venturidüse 35, während anstelle des Ventils 29 nach Fig. 1 bis 3 ein steuerbares, z.B. als 5/3-Wegeventil ausgebildetes Ventil 36 vorgesehen ist, das drei Eingänge a, b, c und zwei Ausgänge d und e besitzt. Dabei ist die Druckleitung 15 an den Ausgang e, die Leitung 30 an den Eingang b, ein Unterdruckausgang der Venturidüse 35 an den Eingang c und ein Eingang der Venturidüse 35 an den Ausgang d angeschlossen. Der Eingang a ist in jeder Stellung des Ventils 36 verschlossen. Außerdem sind während Zuführphasen der Eingang b mit dem Ausgang e und der Eingang a mit dem Ausgang d, und während Füllphasen der Eingang b mit dem Ausgang d und der Eingang c mit dem Ausgang e verbunden. Daher ist die Druckluftquelle 32 während der Zuführphasen über die Anschlüsse b, e unter Umgehung der Venturidüse 35 direkt mit der Druckleitung 15 verbunden, so daß dem Druckbehälter 3 Druckluft zugeführt wird. Während der Füllphasen ist dagegen die Druckluftquelle 32 über die Anschlüsse b, d an den Eingang der Venturidüse 35 und die Druckleitung 15 über die Anschlüsse c, e an den Unterdruckausgang der Venturidüse 35 angeschlossen. Dadurch entsteht im Druckbehälter 3 ein Unterdruck mit der Folge, daß Öl aus dem Vorratstank 1 in den Druckbehälter 3 gesaugt wird, bis das Schwimmerventil 17 (Fig. 1, 2) schließt. Im übrigen ist die Funktion der Ausführungsform nach Fig. 4 analog zu der nach Fig. 1 und 3.

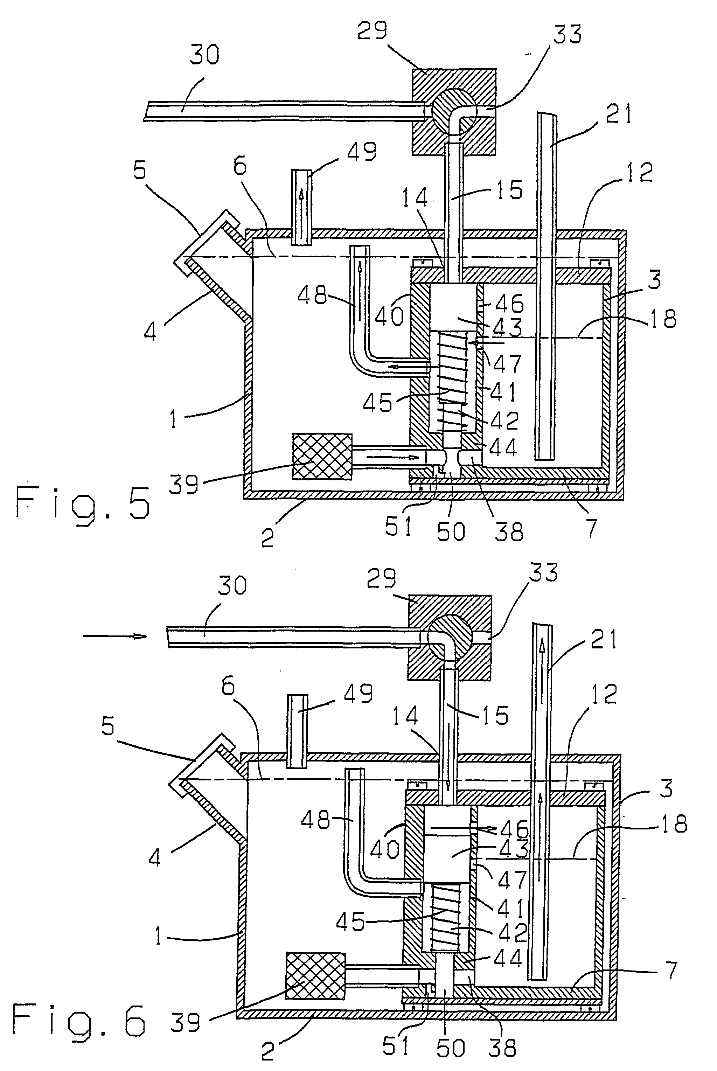

Die derzeit für am besten gehaltene Ausführungsform der Erfindung ist in Fig. 5 und 6 in einem der Fig. 1 ähnlichen Schnitt dargestellt, wobei gleiche Teile mit denselben Bezugszeichen wie in Fig. 1 bis 3 versehen sind. Bei dieser Ausführungsform liegt der maximal vorgesehene Flüssigkeitsspiegel 6 im Vorratstank 1 wiederum oberhalb des maximal vorgesehenen Flüssigkeitsspiegels 18 im Druckbehälter 3, der wie in Fig. 1 bis 3 im Vorratstank 1 angeordnet ist. Außerdem sind hier formschlüssig wirkende Mittel zum Öffnen bzw. Schließen eines vorzugsweise am Boden 7 des Druckbehälters 3 angebrachten Durchgangs 38 vorgesehen, über den der Druckbehälter 3 mit dem Vorratstank 1 verbunden ist. Dabei kann die Verbindung wie in Fig. 1 bis 3 über einen an den Durchgang 38 angeschlossenen, im Vorratstank 1 angeordneten Ölfilter 39 erfolgen.

Innerhalb des Druckbehälters 3 nach Fig. 5 und 6 ist ein Steuerventil 40 angeordnet, das beispielsweise einen Zylinder 41 und einen mit einer Kolbenstange 42 versehenen Kolben 43 enthält. Dabei sind der Kolben 43 und die Kolbenstange 42 koaxial zum Durchgang 14 und so angeordnet, daß der Kolben 43 in einer aus Fig. 5 ersichtlichen oberen Stellung den Durchgang 14 fest verschließt, während die Kolbenstange 42 von ihm nach unten in Richtung des Durchgangs 38 ragt und mit ihrem unteren Ende in einer am Boden 44 des Zylinders 41 befindlichen Öffnung angeordnet ist. Ferner ist die Anordnung so getroffen, daß der Durchgang 38 unmittelbar unter dieser Öffnung und quer zu ihr angeordnet und mit einem solchen Querschnitt versehen ist, daß er beim Absenken der Kolbenstange 42 aus der Stellung nach Fig. 5 in die Stellung nach Fig. 6 vollkommen durch deren unteres Ende geschlossen wird. Dabei ist der Kolben 43 durch eine auf die Kolbenstange 42 aufgezogene und zwischen ihm und dem Boden 44 gestützte Druckfeder 45 in die Stellung nach Fig. 5 vorgespannt.

Eine zum Innenraum des Druckbehälters 3 gerichtete Wand des Zylinders 41 enthält mit axialem Abstand eine in den Druckbehälter 3 mündende Einlaßöffnung 46 und eine ebensolche Entlüftungsöffnung 47. Eine weitere, axial unter der Entlüftungsöffnung 47 liegende Öffnung in einer zum Innenraum des Vorratstanks 1 gerichteten Zylinderwand ist an eine in den Vorratstank 1 mündende Entlüftungsleitung 48 angeschlossen, deren freies Ende vorzugsweise innerhalb des Vorratstanks 1 und oberhalb von dessen maximalem vorgesehenen Flüssigkeitsspiegel 6 liegt. Außerdem ist in der Decke des Vorratstanks 1 eine weitere Entlüftungsleitung 49 angebracht.

Bei der aus Fig. 5 ersichtlichen Stellung des Steuerventils 40, in welcher der Durchgang 14 abgeschlossen und der Durchgang 38 geöffnet ist, ist die Einlaßöffnung 46 vom Kolben 43 abgedeckt, während die Entlüftungsleitung 47 dicht unterhalb der Unterkante des Kolbens 43 angeordnet ist. Dagegen ist bei der aus Fig. 6 ersichtlichen Stellung des Steuerventils 40 der obere Durchgang 14 geöffnet und der untere Durchgang 38 verschlossen, wobei die Einlaßöffnung 46 dicht oberhalb der Oberkante des Kolbens 43 liegt und die Entlüftungsöffnung 47 vom Kolben 43 abgedeckt ist.

Die Wirkungsweise der in Fig. 5 und 6 dargestellten Vorrichtung ist wie folgt:

Soll eine Zuführphase hergestellt werden, wird das Dreiwegeventil 29 so eingestellt, daß die Leitung 30 mit der Druckleitung 15 verbunden ist. Bei geöffnetem Druckregelventil 31 drückt daher die Druckluft in der Leitung 15 den Kolben 43 und mit ihm die Kolbenstange 42 im Zylinder 41 nach unten. Die Unterkante des Kolbens 43 schließt dadurch allmählich die Entlüftungsleitung 47, während die Kolbenstange 42 allmählich den Durchgang 38 versperrt. Sind die Entlüftungsöffnung 47 und der Durchgang 38 vollkommen verschlossen, wird bei der weiteren Abwärtsbewegung des Kolbens 43 allmählich die Einlaßöffnung 46 geöffnet, so daß die Druckluft in Pfeilrichtung (Fig. 6) in den Druckbehälter 3 strömen und das darin befindliche Öl in die Zuführleitung 21 drücken kann, womit eine Zuführphase beginnt.

Die unterste Stellung des Kolbens 43 ist mittels eines Anschlags od. dgl. vorzugsweise so gewählt, daß dabei die zur Entlüftungsleitung 48 führende Öffnung im Zylinder 41 noch offen ist. Daher kann eventuell im Zylinder 41 befindliches Öl über die Entlüftungsleitung 48 in den Vorratstank 1 zurückströmen.

Zur Beendigung einer Zuführphase und Einleitung einer Füllphase wird analog zu Fig. 1 bis 3 die Druckleitung 15 mittels des Dreiwegeventils 29 mit der Entlüftungsleitung 33 verbunden. Dadurch wird der Kolben 43 an seiner Oberseite entlastet, so daß er unter dem Einfluß der Druckfeder 45 wieder nach oben bewegt wird. Dadurch wird zunächst mittels seiner Oberkante die Einlaßöffnung 46 verschlossen. Daran anschließend werden durch seine Unterkante die Entlüftungsleitung 47 geöffnet und gleichzeitig durch die Kolbenstange 42 der Durchgang 38 geöffnet. Dadurch kann jetzt Öl unter dem Einfluß der Schwerkraft in Pfeilrichtung (Fig. 5) aus dem Vorratstank 1 über den Durchgang 38 in den Druckbehälter 3 einströmen, wobei gleichzeitig die über dem momentanen Ölspiegel befindliche Luft durch die Entlüftungsöffnung 47 und die Entlüftungsleitung 48 entweichen kann. Das Ende einer Füllphase ist erreicht, wenn das Öl etwa wieder den Flüssigkeitsspiegel 18 erreicht hat und der Druck des darüber befindlichen, eingeschlossenen Luftpolsters ein weiteres Nachströmen von Öl verhindert.

An einer unterhalb der Kolbenstange 42 und des Durchgangs 38 gelegenen Stelle des Bodens 7 des Druckbehälters 3 ist vorzugsweise eine Aufnahmeöffnung 50 (Fig. 5) für die Kolbenstange 42 vorgesehen, deren unteres Ende über einen Kanal 51 mit demjenigen Abschnitt des Durchgangs 38 verbunden ist, der zwischen der Aufnahmeöffnung 50 und dem Vorratstank 1 liegt. Dadurch wird der Vorteil erzielt, daß sich unter dem unteren Ende der Kolbenstange 42 kein störendes Luft- oder Ölpolster bilden kann, gegen dessen Druck der Kolben 43 abwärtsbewegt werden müßte. Ein wesentlicher Vorteil der anhand Fig. 5 und 6 beschriebenen Vorrichtung besteht im übrigen darin, daß durch den Kolben 43 und die Kolbenstange 42 alle für den Luft- bzw. Ölfluß wichtigen Öffnungen bzw. Durchgänge formschlüssig geschaltet werden und die Bewegung des Kolbens 43 nicht durch den Öldruck beeinflußt wird, da dieser erst aufgebaut wird, wenn der Durchgang 38 verschlossen ist.

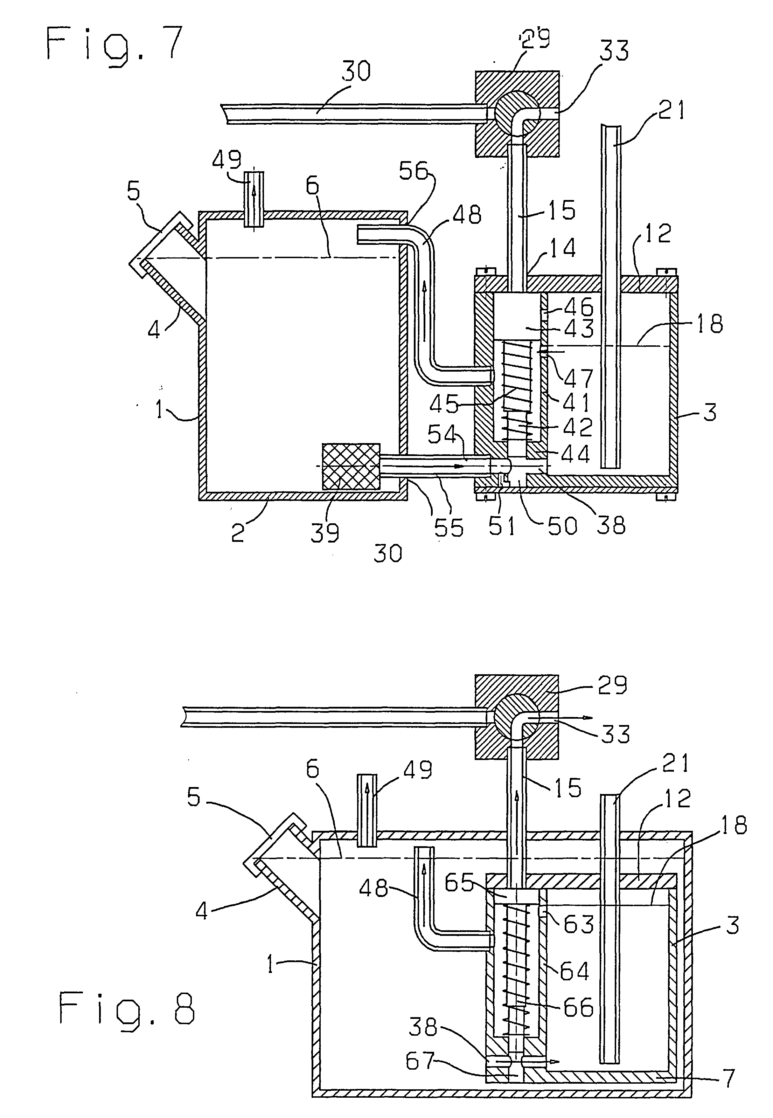

Die Ausführungsform nach Fig. 7 unterscheidet sich von der Ausführungsform nach Fig. 5 und 6 im wesentlichen nur dadurch, daß der Druckbehälter 3 außerhalb des Vorratstanks 1 und so angeordnet ist, daß der maximal vorgesehene Flüssigkeitsspiegel 18 im Druckbehälter 3 unter dem maximal vorgesehenen Flüssigkeitsspiegel 6 im Vorratstank 1 liegt. Dabei ist der Durchgang 38 über eine Leitung 54 mit einer unteren Ausgangsöffnung 55 des Vorratstanks 1 verbunden, und der Ölfilter 39 ist im Vorratstank 1 angeordnet. Außerdem ist die Entlüftungsleitung 48 verlängert und mit einer Öffnung 56 im Vorratstank 1 verbunden, die oberhalb von dessen maximalem vorgesehenen Flüssigkeitsspiegel 6 liegt. Im übrigen sind die Ausbildung und die Funktion der Vorrichtung nach Fig. 7 analog zu denen nach Fig. 5 und 6.

Die Ausführungsformen nach Fig. 5 bis 7 können dadurch verändert werden, daß die Einlaßöffnung 46 und die Entlüftungsöffnung 47 zu einer einzigen Öffnung 63 in einem Zylinder 64 zusammengefaßt werden (Fig. 8). Diese Öffnung 63 wird in einer solchen Höhe in der Wand des Zylinders 64 vorgesehen, daß sie bei verschlossenem Durchgang 14 und geöffnetem Durchgang 38 unterhalb der Unterkante eines im Vergleich zum Kolben 43 axial etwas kürzeren Kolbens 65 und bei geöffnetem Durchgang 14 und geschlossenem Durchgang 38 oberhalb der Oberkante des Kolbens 65 liegt. Daher kann während der Füllphasen (Stellung entsprechend Fig. 8) ungehindert Öl aus dem Vorratstank 1 in den Druckbehälter 3 fließen, wobei die Entlüftung über die Öffnung 63 und die Entlüftungsleitung 48 erfolgt. Zu Beginn einer jeden Zuführphase werden dagegen durch Abwärtsbewegung des Kolbens 65 zunächst der Durchgang 38 und die Öffnung 63 verschlossen. Bei der weiteren Abwärtsbewegung des Kolbens 65 wird die Öffnung 63 jedoch durch die Oberkante des Kolbens 65 wieder freigegeben, so daß jetzt Druckluft in den Behälter 3 strömen kann.

Wie Fig. 8 zeigt, kann das Entstehen von Luft- oder Ölpolstern unterhalb einer mit dem Kolben 65 verbundenen Kolbenstange 66 auch durch einen den Boden 7 des Druckbehälters 3 durchragenden Kanal 67 vermieden werden, sofern der damit verbundene Gegendruck nicht stört.

Das obere Ende der Entlüftungsleitung 48 liegt zweckmäßig stets oberhalb des maximal vorgesehenen Flüssigkeitsspiegels 6 im Vorratstank 1, damit ein Auslaufen des Vorratstanks 1 vermieden wird. Alternativ kann die Entlüftungsleitung 48 mit einem Ventil entsprechend dem Schwimmerventil 17 nach Fig. 1 bis 3 od. dgl. versehen werden, um ein Auslaufen von Öl unter allen denkbaren Betriebsbedingungen zu vermeiden. Abgesehen davon könnte die Entlüftungsleitung 48 auch ganz entfallen, in welchem Fall allerdings etwa vorhandene Luftblasen durch die in der Zylinderwand verbleibende Öffnung hindurch in den mit Flüssigkeit gefüllten Teil des Vorratstanks 1 entweichen würden.

Die Einpassung des Kolbens 43, 65 in den Zylinder 41, 64 erfolgt vorzugsweise ohne Anwendung von Dichtringen od. dgl. und mit soviel Spiel, daß sich eine leichtgängige Verschiebung des Kolbens 43, 65 ergibt. Etwaige Ölverluste durch den Ringspalt zwischen dem Kolben 43, 65 und dem Zylinder 41, 64 können in Kauf genommen werden. Am Kolben 43, 65 vorbeiströmende Luft kann durch die Entlüftungsleitung 48 entweichen, selbst wenn diese teilweise mit Öl gefüllt sein sollte.

Die Erfindung ist nicht auf die beschriebenen Ausführungsbeispiele beschränkt, die sich auf vielfache Weise abwandeln lassen. Beispielsweise ist es möglich, den Druckbehälter 3 in einer am Boden 2 des Ölvorratstanks 1 ausgebildeten Vertiefung oder in anderer Weise, als in Fig. 4 und 7 dargestellt ist, außerhalb des Vorratstanks 1 anzuordnen. Für die beschriebene Funktion ergeben sich dadurch keinerlei Änderungen, solange der Ölspiegel 6 im Vorratstank 1 oberhalb des dem vollen Zustand des Druckbehälters 3 entsprechenden Ölspiegels 18 gehalten wird. Dies kann z.B. auch dadurch sichergestellt werden, daß der Druckbehälter 3 räumlich unterhalb des Vorratstanks 1 montiert wird. Bei diesen Varianten ist zusätzlich eine Versorgungsleitung erforderlich, die einen ausreichend tief liegenden Auslaß des Vorratstanks 1 mit dem Durchgang 8, 38 verbindet.

Weitere Abweichungen von der beschriebenen Ausführungsform können darin bestehen, daß der Druckbehälter 3 mit einem beispielsweise bei 5 bar ansprechenden Sicherheitsventil und ebenso wie der Vorratstank 1 mit einer zusätzlichen, fest verschließbaren, zur Entleerung bestimmten Ablaßöffnung versehen wird. Weiter wäre möglich, den Vorratstank 1 mit einem Ölstandgeber zu versehen, der ein Abschaltsignal für die zu schmierende Maschine od. dgl. liefert, wenn der Ölspiegel 6 unter einen kritischen Wert absinkt.

Abgesehen davon versteht sich, daß anstelle der Ventile 10, 17, 26, 31, 40 usw. und der anderen Funktionsteile andere Bauelemente mit gleicher Funktion vorgesehen werden können.

Möglich wäre es weiter, bei der Ausführungsform nach Fig. 1 bis 3 das Schwimmerventil 17 wegzulassen. Das Steuerventil 40 in Fig. 5 bis 8 kann entweder ein in den Druckbehälter 3 zusätzlich eingebautes Einzelteil sein oder dadurch hergestellt werden, daß der Zylinder 41, 64 durch entsprechende Wandabschnitte des Druckbehälters 3 gebildet wird.

Wird die beschriebene Vorrichtung zur Schmierung bzw. Reinigung einer Rundstrickmaschine mit einem drehbaren Nadelzylinder und einem stillstehenden Schloßmantel verwendet, erfolgt die abschnittweise Zufuhr des Öls zu den Zuführstellen vorzugsweise so, daß die Zuführphasen an jeder Zuführstelle zeitlich genau so lang gewählt werden, wie einer Nadelzylinderumdrehung entspricht, während daran anschließend Pausen von einer Länge vorgesehen werden, die wenigstens einer Umdrehung des Nadelzylinders entspricht. Hierdurch ergibt sich der weitere Vorteil, daß keine aufwendigen, mit hoher Präzision schaltenden Magnetventile 23 benötigt werden, wodurch sich die Kosten der beschriebenen Vorrichtung weiter reduzieren lassen. Die Düsen 28 sind in diesem Fall wahlweise als Ölstrahlen abgebende Spritzdüsen oder als Luft/Öl-Nebel zuführende Sprühdüsen ausgebildet.

Weitere Abwandlungen von den beschriebenen Ausführungsbeispielen sind dadurch möglich, daß die verschiedenen Einzelteile in anderen als den dargestellten Kombinationen verwendet werden.

Schließlich versteht sich, daß das Volumen des Druckbehälters 3 vorzugsweise wesentlich kleiner als das Volumen des Vorratstanks 1 ist. Dabei kann das Volumen des Druckbehälters 3 so groß sein, wie für eine oder mehrere komplette Zuführphase(n) benötigt wird. Außerdem können zwei oder mehr Druckbehälter 3 vorgesehen sein, von denen wenigstens einer der Ölzufuhr dient, während wenigstens ein weiterer gleichzeitig neu mit Öl gefüllt wird.

## Patentansprüche

1. Schmiervorrichtung für Maschinenteile an einer Strickmaschine zur dosierten, in zeitlich beabstandeten Phasen erfolgenden Zufuhr einer Schmierflüssigkeit, insbesondere Öl, an wenigstens eine Zuführstelle der Strickmaschine, mit einem geschlossenen, zur Aufnahme der Schmierflüssigkeit bestimmten Druckbehälter (3), der mit einer Zuführleitung (21) für die Schmierflüssigkeit und mit einer ein steuerbares Ventil (29) aufweisenden, zur Führung von Druckluft bestimmten Druckleitung (15) versehen ist, und mit einem über einen Durchgang (8, 38) mit dem Druckbehälter (3) verbundenen Vorratstank (1) für die Schmierflüssigkeit, **dadurch gekennzeichnet, daß** die Anordnung so getroffen ist, daß die Schmierflüssigkeit in Zuführphasen durch die Druckluft in die Zuführleitung (21) gedrückt und gleichzeitig der Durchgang (8,38) durch die Druckluft selbsttätig verschlossen und der Durchgang (8,38) zur Wiederherstellung eines vorgewählten Flüssigkeitsspiegels im Druckbehälter (3) in zwischen den Zuführphasen vorgesehenen Füllphasen selbsttätig geöffnet wird.

2. Vorrichtung nach Anspruch 1, **dadurch gekennzeichnet, daß** die Zufuhrleitung (21) einen Abschnitt aufweist, der als eine bis dicht zum Boden (7) des Druckbehälters (3) reichende Steigleitung (22) ausgebildet ist.

3. Vorrichtung nach Anspruch 1 oder 2, **dadurch gekennzeichnet, daß** die Druckleitung (15) mit einer Entlüftungsleitung verbindbar ist.

4. Vorrichtung nach Anspruch 3, **dadurch gekennzeichnet, daß** das steuerbare Ventil (29) als Dreiwegeventil ausgebildet ist, das einen zur Atmosphäre führenden Auslaß (33) aufweist.

5. Vorrichtung nach einem der Ansprüche 1 bis 4, **dadurch gekennzeichnet, daß** die Druckleitung (15) über ein zur Druckluftquelle (32) hin verschließbares Schwimmerventil (17) mit dem Innenraum des Druckbehälters (3) verbunden ist.

6. Vorrichtung nach einem der Ansprüche 1 bis 4, **dadurch gekennzeichnet, daß** ein maximaler vorgesehener Flüssigkeitsspiegel im Druckbehälter (3) oberhalb eines maximalen vorgesehenen Flüssigkeitsspiegels im Vorratstank (1) angeordnet und ein Mittel zur Erzeugung eines Unterdrucks im Druckbehälter (3) während der Füllphasen vorgesehen ist.

7. Vorrichtung nach Anspruch 6, **dadurch gekennzeichnet, daß** das Mittel eine Venturidüse (35) enthält und das steuerbare Ventil (36) so eingerichtet ist, daß es die Druckluftquelle (32) während der Zuführphasen mit der Druckleitung (15), während der Füllphasen dagegen mit dem Eingang der Venturidüse (35) und gleichzeitig die Druckleitung (15) mit einem Unterdruckausgang der Venturidüse (35) verbindet.

8. Vorrichtung nach einem der Ansprüche 1 bis 4, **dadurch gekennzeichnet, daß** ein maximaler vorgesehener Flüssigkeitsspiegel des Druckbehälters (3) unterhalb eines maximalen vorgesehenen Flüssigkeitsspiegels des Vorratstanks (1) angeordnet ist.

9. Vorrichtung nach einem der Ansprüche 1 bis 8, **dadurch gekennzeichnet, daß** formschlüssig wirkende Mittel zum Öffnen bzw. Schließen des Durchgangs (8, 38) vorgesehen sind.

10. Vorrichtung nach Anspruch 9, **dadurch gekennzeichnet, daß** die Mittel ein Steuerventil (40) enthalten.

11. Vorrichtung nach Anspruch 10, **dadurch gekennzeichnet, daß** das Steuerventil (40) einen Zylinder (41, 64) aufweist, der an einen in einem oberen Bereich des Druckbehälters (3) vorgesehenen Durchgang (14) angeschlossen ist und einen Kolben (43, 65) aufweist, der mit einer den unteren Durchgang (38) öffnenden bzw. schließenden Kolbenstange (42, 66) verbunden ist, wobei in einer ersten Kolbenstellung der obere Durchgang (14) verschlossen und der untere Durchgang (38) geöffnet und in einer zweiten Kolbenstellung der obere Durchgang (14) geöffnet und der untere Durchgang (38) verschlossen ist.

12. Vorrichtung nach Anspruch 11, **dadurch gekennzeichnet, daß** in einer Wand des Zylinders (41, 64) wenigstens eine in den Druckbehälter (3) mündende Öffnung (46, 47 bzw. 63) vorgesehen ist, die während Füllphasen der Entlüftung des Druckbehälters (3) und während Zuführphasen der Verbindung des oberen Durchgangs (14) mit dem Innenraum des Druckbehälters (3) dient.

13. Vorrichtung nach Anspruch 11 oder 12, **dadurch gekennzeichnet, daß** in einer Wand des Zylinders (41, 64) eine der Entlüftung dienende, in den Vorratstank (1) mündende Öffnung vorgesehen ist.

14. Vorrichtung nach einem der Ansprüche 11 bis 13, **dadurch gekennzeichnet, daß** der Kolben (43, 65) durch eine Feder (45) in die erste Stellung vorgespannt ist.

15. Vorrichtung nach einem der Ansprüche 1 bis 14, **dadurch gekennzeichnet, daß** der Druckbehälter (3) im Vorratstank (1) angeordnet ist.

16. Vorrichtung nach einem der Ansprüche 1 bis 15, **dadurch gekennzeichnet, daß** der Druckbehälter (3) ein wesentlich kleineres Volumen als der Vorratstank (1) aufweist.

## Claims

1. Lubrication device for machine parts on a knitting machine for dosing the supply, effected in temporally spaced phases, of a lubrication liquid, especially oil, at at least one supply point of the knitting machine, having a closed pressure vessel (3) which is intended to receive the lubrication liquid, said vessel having a supply pipe (21) for the lubrication liquid and being provided with a pressure pipe (15) which has a controllable valve (29) and is intended for conduction of compressed air, and having a supply tank (1) for the lubrication liquid which is connected to the pressure vessel (3) via a connecting passage (8, 38), **characterised in that** the arrangement is such that the lubrication liquid is forced in supply phases by means of the compressed air into the supply pipe (21), and at the same time the connecting passage (8, 38) is automatically closed by means of the compressed air, and the connecting passage (8, 38) is automatically opened in filling phases which are provided between the supply phases in order to restore a pre-selected liquid level in the pressure vessel (3).

2. Device according to claim 1, **characterised in that** the supply pipe (21) has a portion which is configured as a riser (22) which extends close to the base (7) of the pressure vessel (3).

3. Device according to claim 1 or 2, **characterised in that** the pressure pipe (15) can be connected to a vent pipe.

4. Device according to claim 3, **characterised in that** the controllable valve (29) is configured as a three-way valve which has an outlet (33) which leads to the atmosphere.

5. Device according to one of the claims 1 to 4, **characterised in that** the pressure pipe (15) is connected to the interior of the pressure vessel (3) via a ball valve (17) which can be closed in the direction of the compressed air source (32).

6. Device according to one of the claims 1 to 4, **characterised in that** a maximum provided liquid level in the pressure vessel (3) is disposed above a maximum provided liquid level in the supply tank (1) and a means is provided for producing a reduced pressure in the pressure vessel (3) during the filling phases.

7. Device according to claim 6, **characterised in that** the means contains a Venturi nozzle (35) and the controllable valve (36) is arranged in such a manner that, during the supply phases, it connects the compressed air source (32) to the pressure pipe (15) but, during the filling phases, it connects said compressed air source to the inlet of the Venturi nozzle (35) and at the same time it connects the pressure pipe (15) to a reduced pressure outlet of the Venturi nozzle (35).

8. Device according to one of the claims 1 to 4, **characterised in that** a maximum provided liquid level of the pressure vessel (3) is disposed below a maximum provided liquid level of the supply tank (1).

9. Device according to one of the claims 1 to 8, **characterised in that** means which effect a positive fit are provided for opening or closing the connecting passage (8, 38).

10. Device according to claim 9, **characterised in that** the means contain a control valve (40).

11. Device according to claim 10, **characterised in that** the control valve (40) has a cylinder (41, 64), which is connected to a connecting passage (14) provided in an upper region of the pressure vessel (3), and has a piston (43, 65) which is connected to a piston rod (42, 66) which opens or closes the lower connecting passage (38), the upper connecting passage (14) being closed and the lower connecting passage (38) being opened in a first piston position, and the upper connecting passage (14) being opened and the lower connecting passage (38) being closed in a second piston position.

12. Device according to claim 11, **characterised in that** at least one opening (46, 47 or 63) which opens into the pressure vessel (3) is provided in one wall of the cylinder (41, 64), which opening serves for venting the pressure vessel (3) during filling phases and for connecting the upper connecting passage (14) to the interior of the pressure vessel (3) during supply phases.

13. Device according to claim 11 or 12, **characterised in that** an opening which serves for venting and opens into the supply tank (1) is provided in one wall of the cylinder (41, 64).

14. Device according to one of the claims 11 to 13, **characterised in that** the piston (43, 65) is pre-stressed in the first position by means of a spring (45).

15. Device according to one of the claims 1 to 14, **characterised in that** the pressure vessel (3) is disposed in the supply tank (1).

16. Device according to one of the claims 1 to 15, **characterised in that** the pressure vessel (3) has a substantially smaller volume than the supply tank (1).

## Revendications

1. Dispositif de lubrification pour des pièces de machines sur une machine à tricoter pour un apport dosé de liquide de lubrification, en particulier d'huile, en phases espacées dans le temps, à au moins un point d'apport de la machine à tricoter, avec un réservoir sous pression fermé (3) destiné à recevoir le liquide de lubrification, qui est muni d'une conduite d'apport (21) pour le liquide de lubrification et d'une conduite sous pression (15) comprenant une vanne pouvant être commandée (29) et destinée à transporter de l'air comprimé et avec un réservoir de stockage (1) pour le liquide de lubrification relié au réservoir sous pression (3) par l'intermédiaire du passage (8, 38), **caractérisé en ce que** la disposition est telle que, lors de phases d'apport, le liquide de lubrification est pressé par l'air comprimé dans la conduite d'apport (21) et le passage (8, 38) est en même temps fermé automatiquement par l'air comprimé et, lors de phases de remplissage prévues entre les phases d'apport, le passage (8, 38) est ouvert automatiquement, et ceci pour rétablir un niveau de liquide présélectionné dans le réservoir sous pression (3).

2. Dispositif selon la revendication 1, **caractérisé en ce que** la conduite d'apport (21) comprend une section, qui est formée en tant que conduite ascendante (22) s'étendant de manière jointive jusqu'au fond (7) du réservoir sous pression (3).

3. Dispositif selon la revendication 1 ou 2, **caractérisé en ce que** la conduite sous pression (15) peut être reliée avec une conduite d'évent.

4. Dispositif selon la revendication 3, **caractérisé en ce que** la vanne pouvant être commandée (29) est conçue comme vanne à trois voies qui comprend une sortie (33) allant vers l'atmosphère.

5. Dispositif selon l'une des revendications 1 à 4, **caractérisé en ce que** la conduite sous pression (15) est reliée avec le compartiment intérieur du réservoir sous pression (3) par l'intermédiaire d'une vanne à flotteur (17) pouvant être fermée en direction de la source d'air comprimé (32).

6. Dispositif selon l'une des revendications 1 à 4, **caractérisé en ce qu'**un niveau maximum et prévu de liquide dans le réservoir sous pression (3) se situe au-dessus d'un niveau maximum et prévu de liquide dans le réservoir de stockage (1) et **en ce qu'**il est prévu un moyen pour produire une dépression dans le réservoir sous pression (3) lors des phases de remplissage.

7. Dispositif selon la revendication 6, **caractérisé en ce que** le moyen comprend une buse de Venturi (35) et **en ce que** la vanne pouvant être commandée (36) est aménagée de telle manière qu'elle relie la source d'air comprimé (32) avec la conduite sous pression (15) lors des phases d'apport et par contre avec l'entrée de la buse de Venturi (35) lors des phases de remplissage et simultanément la conduite sous pression (15) avec la sortie en dépression de la buse de Venturi (35).

8. Dispositif selon l'une des revendications 1 à 4, **caractérisé en ce qu'**un niveau maximum et prévu de liquide du réservoir sous pression (3) se situe en dessous d'un niveau maximum et prévu de liquide du réservoir de stockage (1).

9. Dispositif selon l'une des revendications 1 à 8, **caractérisé en ce que** des moyens agissant en complémentarité de forme sont prévus pour l'ouverture ou la fermetures du passage (8, 38).

10. Dispositif selon la revendication 9, **caractérisé en ce que** les moyens comprennent une vanne de commande (40).

11. Dispositif selon la revendication 10, **caractérisé en ce que** la vanne de commande (40) comprend un cylindre (41, 64), qui est raccordé à un passage (14) prévu dans une zone supérieure du réservoir sous pression (3), et un piston (43, 65), qui est relié à une tige de piston (42, 66) ouvrant ou fermant le passage inférieur (38), le passage supérieur (14) étant fermé et le passage inférieur (38) étant ouvert dans une première position du piston et le passage supérieur (14) étant ouvert et le passage inférieur (38) étant fermé dans une deuxième position du piston.

12. Dispositif selon la revendication 11, **caractérisé en ce que** dans une paroi du cylindre (41, 64) est prévue au moins une ouverture (46, 47 ou 63) aboutissant dans le réservoir sous pression (3) et qui sert à la ventilation du réservoir sous pression. (3) lors de phases de remplissage et à relier le passage supérieur (14) avec le compartiment intérieur du réservoir sous pression (3) lors de phases d'apport.

13. Dispositif selon la revendication 11 ou 12, **caractérisé en ce que** dans une paroi du cylindre (41, 64) est prévue une ouverture servant à la ventilation et aboutissant dans le réservoir de stockage (1).

14. Dispositif selon l'une des revendications 11 à 13, **caractérisé en ce que** le piston (43, 65) est précontraint dans la première position par un ressort (45).

15. Dispositif selon l'une des revendications 1 à 14, **caractérisé en ce que** le réservoir sous pression (3) est disposé dans le réservoir de stockage (1).

16. Dispositif selon l'une des revendications 1 à 15, **caractérisé en ce que** le volume du réservoir sous pression (3) est nettement inférieur au volume du réservoir de stockage (1).
